# EUROPEAN PATENT SPECIFICATION

(11) **EP 2 960 979 B1**
(45) Date of publication and mention of the grant of the patent: **04.10.2017**
(21) Application number: 15170312.1
(22) Date of filing: 02.06.2015
(51) Int. Cl.: H01M 10/613, H01M 10/625, H01M 10/6569, H01M 10/663, H01M 10/6556, F25B 41/06, B60L 11/18, F25B 5/02, F25B 39/02, F25B 9/00, F25B 40/00, F25B 49/02

(54) **BATTERY COOLER SYSTEM**
BATTERIEKÜHLERSYSTEM
SYSTÈME DE REFROIDISSEMENT DE BATTERIE

(30) Priority: 26.06.2014 DE 102014108993
(43) Date of publication of application: 30.12.2015
(73) Proprietor: Valeo Klimasysteme GmbH, 96476 Bad Rodach (DE)
(72) Inventor: HAUSSMANN, Roland, 68169 Wiesloch (DE)
(74) Representative: Metz, Gaëlle

(56) References cited:
- EP-A2- 2 578 967
- JP-A- 2010 133 644
- US-A1- 2012 125 032
- US-A1- 2012 145 246

## Description

The invention relates to a battery cooler system, in particular for an electric or hybrid vehicle.

In electrically operated vehicles or hybrid vehicles, during operation the battery modules generate heat, which is often discharged via a cooling circuit. In this instance, it is advantageous to use a part-circuit of a vehicle air-conditioning system which is already provided in the vehicle to cool the battery modules.

Since in most cases a plurality of battery cells are combined to form separate battery modules which are thermally decoupled from each other so that no heat exchange between the individual battery modules is carried out, the battery cooler circuit is often divided into a plurality of cooling branches, which are each associated with one or more of the battery modules. In this instance, the refrigerating medium is intended to flow through the cooling branches in a parallel manner.

It is known to associate with the battery cooler circuit an individual expansion device, which is provided between an output of the gas cooler and an input into a brancher which divides the refrigerating medium over the individual cooling branches. A known thermostatic expansion valve (TXV) which controls the refrigerating medium throughflow in accordance with the circumstances in the battery cooler circuit is used in this instance as an expansion device. The pressure drop in the thermostatic expansion valve is approximately from 60 to 95% of the total pressure difference, whilst the pressure drop in the brancher is only from 3 to 10%. This is a result of the fact that the pressure difference between the high-pressure branch and the low-pressure branch of the vehicle air-conditioning system is significantly higher at high ambient temperatures than at low temperatures. However, the thermostatic expansion valve must also supply the evaporator with a sufficient quantity of refrigerating medium, that is to say, with an adequate refrigerating medium flow, at the minimum operating temperature and consequently a minimum pressure difference, and this is only possible when the pressure drop in the brancher is small. Therefore, known branchers are configured for a small pressure drop.

In order to ensure the longest possible service-life for the individual battery cells, there must be only a very small temperature difference of no more than 5K between the individual battery cells. However, the small pressure drop over the brancher makes it more difficult to distribute in a homogeneous manner over the different cooling branches the refrigerating medium which, upstream of the brancher, is always present in a fluid-gaseous admixture at higher temperatures.

As a result of the phase admixture in the brancher, it is also necessary to arrange the known branchers in a precise vertical orientation in order to achieve the most homogeneous distribution possible of the two-phase admixture over the different outlet lines, even with a small throughflow.

During the cooling of battery modules, it is further the case that a cooling unit also has to operate at low ambient temperatures of, for example, up to -10ºC or less, in contrast to a passenger space cooling unit which is normally switched off at these temperatures.

At such low temperatures, however, the proportion of fluid refrigerating medium upstream of the brancher is substantially 100%, for which the known branchers are not configured. US2012125032 describes a battery cooler system having a refrigerating medium circuit with an air conditioning evaporator and a battery cooler circuit which has a plurality of cooling branches, with at least a first and a second throttle stage. An object of the invention is to ensure homogeneous cooling performance in a battery cooler circuit over the entire range of the ambient temperatures in both summer and winter.

This object is achieved with a battery cooler system according to claim 1 having a refrigerating medium circuit, a compressor, a gas cooler, a pressure reduction device and a battery cooler circuit which has a plurality of cooling branches. The pressure reduction device has a brancher and at least a first and a second throttle stage, there being provided between the first and the second throttle stage a branching location with which the refrigerating medium flow is distributed over the cooling branches of the battery cooler circuit. The two throttle stages of the pressure reduction device are adjusted in such a manner that the refrigerating medium is present substantially in a single phase downstream of the first throttle stage. In this manner, a homogeneous uniform distribution is always carried out over the individual cooling branches. Depending on the pressure in the high-pressure branch of the refrigerating medium circuit and depending on the ambient temperatures, the refrigerating medium upstream of the first throttle stage can be overcritical or fluid. However, the same proportion of fluid refrigerating medium always reaches all the cooling branches, which leads to a uniform temperature distribution in all the cooling branches and consequently to uniform cooling of all the battery cells.

The pressure drop over the first throttle stage is in the order of magnitude of approximately from 10% to 50% of the entire pressure drop over the pressure reduction device. With this distribution of the pressure drop over the two throttle stages, it is possible for the refrigerating medium to be present in a phase downstream of the first throttle stage.

The first throttle stage is preferably formed by a single throttle location, that is to say, by a single narrowing of the flow cross-section in the pressure reduction device. It is possible to provide the first throttle stage by a throttle location in a main line of the brancher upstream of the branching location or in the region of an inlet of the brancher. In a preferred embodiment, however, the first throttle stage is integrated in a shut-off valve preferably as a calibrated bore in a body of the shut-off valve, in particular upstream of a valve seat of the shut-off valve. An advantage of the integration of the first throttle stage in the shut-off valve is that there only has to be provided a single component which at the same time can take on the switching-off function and the throttle function. In this manner, the structural space is reduced and the costs can be reduced.

The second throttle stage is preferably formed by one throttle location per cooling branch, in particular in the outlet lines of the brancher, so that the refrigerating medium is depressurised to the final pressure thereof only after distribution over the outlet lines.

It is possible for each of the throttle locations to construct them by means of an inserted pipe having a calibrated inner diameter, the length and inner diameter being precisely determined by means of a precision bore or by means of a pipe having a calibrated inner diameter, which is secured in the respective component at the desired location. In both cases, the flow cross-section is reduced over a predetermined length to a predetermined cross-section and consequently brings about a pressure reduction. The use of a calibrated bore has the advantage that the pressure reduction function can be integrated in this component directly when the brancher is produced, which reduces the number of components required and reduces the production costs. In contrast, an advantage in the use of pipes with a calibrated inner diameter is that these pipes can be prefabricated in a cost-effective manner.

The throttle location of the second throttle stage may be formed by a cross-section narrowing of the main line or at least one of the outlet lines of the brancher.

In a preferred embodiment, there is arranged parallel with the battery cooler circuit an evaporator which is part of a vehicle air-conditioning system circuit and which, for example, brings about a cooling of a vehicle inner space. In this manner, the battery cooler system can be integrated in a provided vehicle air-conditioning system circuit, the refrigerating medium circuit of the battery cooler system being partially identical to the vehicle air-conditioning system circuit. In particular components such as the compressor, the gas cooler, an accumulator or an inner heat exchanger are used by both part-systems. The battery cooler circuit may in this instance be considered to be a part-cooling circuit of the vehicle air-conditioning system circuit.

There is associated with the evaporator a safety valve which prevents the formation of an excessively high pressure in the high-temperature branch of the refrigerating medium circuit. As a result of the parallel connection of the evaporator and the battery cooler circuit, a separate safety valve in the battery cooler circuit can be dispensed with.

There is associated with the safety valve a bypass line in which the safety valve is arranged and which enables a refrigerating medium flow when a critical pressure threshold, which may in particular be in the order of magnitude of from 120 to 150 bar (from 12 to 15 MPa), is reached at the safety valve. Upstream of the evaporator, the bypass line bridges, for example, a shut-off valve, by means of which a throughflow of the evaporators can be completely prevented. The shut-off valve and the bypass line which bridges it are in this instance located in the part-circuit of the refrigerating medium circuit, which part-circuit is connected parallel with the battery cooler circuit.

R744 is preferably used as the refrigerating medium. The invention is described in greater detail below with reference to a plurality of embodiments and the appended Figures, in which:
- Figure 1 is a schematic illustration of a vehicle air-conditioning system with a battery cooler system according to the invention;
- Figure 2 is a schematic sectioned view of a brancher of the battery cooler system according to the invention in a first embodiment;
- Figure 3 is a schematic sectioned view of a brancher of the battery cooler system according to the invention in a second embodiment;
- Figure 4 is a schematic sectioned view of a pressure reduction device of the battery cooler system according to the invention;
- Figure 5 is a schematic illustration of a switching cycle of a shut-off valve of a pressure reduction device of the battery cooler system according to the invention;
- Figure 6 is a diagrammatic illustration of the maximum pressure difference in the pressure reduction device of the battery cooler system according to the invention, in accordance with the ambient temperature;
- Figure 7 is a diagrammatic illustration of the enthalpy difference for the condensation of R744 in accordance with the ambient temperature; and
- Figure 8 is a Mollier diagram of the refrigerating medium R744 with the operating range of the battery cooler circuit according to the invention at low and at high ambient temperatures.

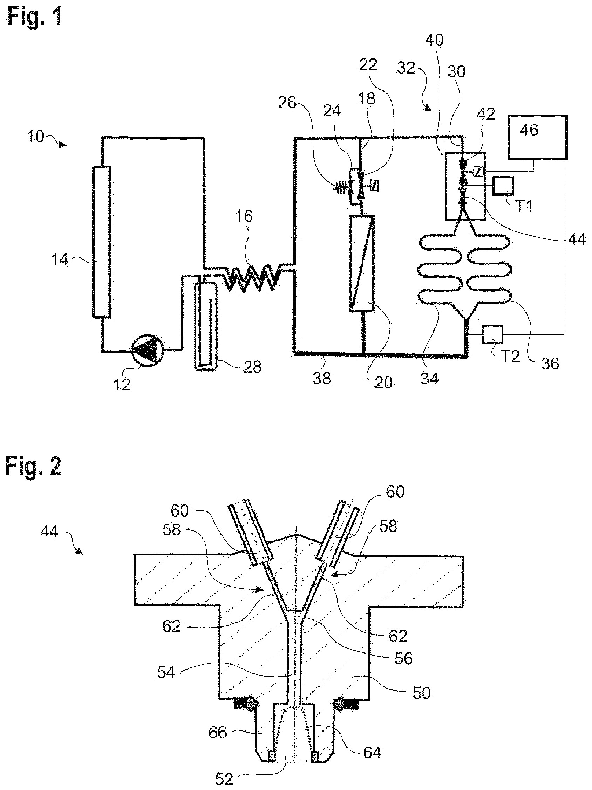

Figure 1 shows a refrigerating medium circuit 10 of a vehicle air-conditioning system which is not illustrated in greater detail. A refrigerating medium, in this instance R744, flows through a plurality of part-cooling circuits. It is condensed in a compressor 12 before it is cooled in a gas cooler 14, for example, by means of cooling with ambient air. The gaseous refrigerating medium which is under high pressure subsequently passes an inner heat exchanger 16 in which it discharges a portion of the thermal energy thereof to returning, depressurised refrigerating medium.

In a first part-cooling circuit 18, the refrigerating medium flows through an evaporator 20 of the vehicle air-conditioning system with which, for example, a vehicle inner space is cooled.

There is arranged upstream of the evaporator 20 a shut-off valve 22 by means of which the part-cooling circuit 18 can be blocked when a cooling action is not required. In this example, the shut-off valve 22 contains a pressure reduction stage in the form of an opening which has a reduced cross-section and which acts as a throttle location and which brings about a partial depressurisation of the refrigerating medium by means of the pressure reduction.

The pressure reduction from the high-pressure to the low-pressure side is carried out in this instance as known for R744 refrigerating medium circuits with a fixedly predetermined cross-section narrowing. The diameter of this throttle location is inter alia selected in accordance with the requested power of the evaporator.

The shut-off valve 22 is bridged by means of a bypass line 24 having a safety valve 26. The safety valve 26 is configured in such a manner that it enables a flow of refrigerating medium through the part-cooling circuit 18 when a critical pressure threshold, which may be, for example, approximately from 120 to 150 bar (12 to 15 MPa), is reached at the safety valve 26.

It is generally the case that, when R744 is used as a refrigerating medium, the refrigerating medium circuit has to be protected from excess pressure. This is achieved in this instance by the safety valve 26 which, in the event of a sudden pressure increase, opens a flow connection from the high-pressure side to the low-pressure side of the refrigerating medium circuit. This bypass function is available here under all operating conditions. Such a pressure increase may, for example, occur in the event of a significant vehicle acceleration, in which the compressor throughput cannot be regulated downwards in a sufficiently rapid manner so that a large quantity of gas is directed into the gas cooler 14.

The refrigerating medium flowing back from the evaporator 20 again passes the inner heat exchanger 16 and an accumulator 28 in which any fluid refrigerating medium which may be present is separated, before the refrigerating medium flows back to the compressor 12.

In a state parallel with the first part-cooling circuit 18, the refrigerating medium flows through a battery cooler circuit 30 which is part of a battery cooler system 32. The battery cooler circuit may have a cooling power of approximately from 0.5 to 2 kW. Battery cells of a hybrid or electric vehicle (not illustrated in greater detail) are arranged in this instance in a plurality of modules, which are cooled by means of two cooling branches 34, 36 which are connected in parallel. The battery cooler circuit 30 is therefore divided in this instance into two cooling branches 34, 36 which, after passing through the battery modules, open in a common return suction line 38. The cooling branches 34, 36 act as an evaporator in which the fluid refrigerating medium which is located therein absorbs the heat of the battery cells and is thereby converted into the gaseous state.

In a state downstream of the outlet of the evaporator 20, the first part-cooling circuit 18 opens into the return suction line 38.

A pressure reduction device 40 is arranged upstream of the two cooling branches 34, 36. In the variant illustrated in this instance, the pressure reduction device 40 has a shut-off valve 42 which is arranged upstream of a branch 44.

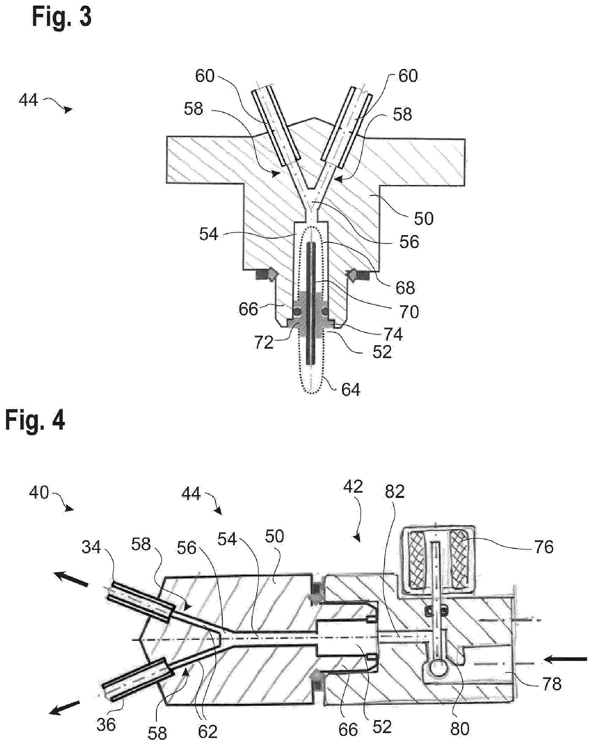

In a possible embodiment, which will be described below (see Figure 4), the shut-off valve 42 and the branch 44 are combined in a single component. However, they may also be constructed as separate components. It would also be possible to dispense with the shut-off valve 42 and to carry out the pressure reduction completely via the brancher 44.

The shut-off valve 42 is connected to a control unit 46 which can determine the opening state of the shut-off valve 42. In this example, the shut-off valve 42 may assume only the two control states "open" and "closed".

In this example, a temperature sensor T₁ which is also connected to the control unit 46 is arranged directly downstream of the shut-off valve 42. Directly at the connection location 48 of the two cooling branches 34, 36 there is provided in this instance a second temperature sensor T₂ which is also connected to the control unit 46.

In Figures 2 to 4, various embodiments of the brancher 44 are illustrated. For reasons of clarity, the reference numeral 44 is used for all three embodiments.

The brancher 44 which is illustrated in Figure 2 has a body 50 in which there is recessed an inlet 52 which merges into a main line 54. At the end of the main line 54 is a branching location 56 from which the main line 54 is divided into two outlet lines 58 which in these examples are always constructed in an identical manner. Each of the outlet lines 58 merges into an outlet 60 by means of which the respective outlet line 58 is connected to one of the two cooling branches 34, 36 of the battery cooler circuit 30.

There is integrated in the brancher 44 a throttle stage which has a narrowing acting as a throttle location and which consequently brings about a pressure reduction downstream of the throttle location.

In the example shown in Figure 2, the throttle stage is produced in each case by means of a calibrated bore 62 with a fixedly predetermined diameter and position in each of the outlet lines 58. In this instance, the calibrated bore 62 is directly adjacent to the branch 56 and is consequently located directly downstream of the main line 54.

In place of a branch in two outlet lines 58, a branch could also be provided in more than two outlet lines 58. It would also be possible to provide a plurality of distributors 44 in additional battery cooler circuits which are connected parallel with the battery cooler circuit 30 (not shown).

In this example, the throttle stage is provided only downstream of the branching location 56. This leads to the refrigerating medium, which has a single phase in the main line 54 completely or substantially completely (in accordance with the ambient temperature overcritical or fluid, as will be described below), being distributed in a uniform manner over the two outlet lines 58. As a result of the identical aggregate state, an installation position of the brancher 44 deviating from the vertical is also unproblematic.

Within the inlet 52, there is provided in this instance a filter 64 which prevents contamination of the brancher 44.

The inlet 52 is in these examples formed in a connection piece 66 by means of which the brancher 44 can be connected to the pipelines of the battery cooler circuit 30 or to the shut-off valve 42 (see Figure 4).

The calibrated bore 62 has, for example, a diameter of from 0.2 to 1.0 mm and a length of from 10 to 40 mm, the flow becoming more stable and the tendency towards the formation of oscillations in the flow also decreasing as the length of the throttle location increases.

Figure 3 shows an embodiment of a brancher 44 in which the throttle stage is provided in the region of the main line 54. In this instance, the pressure reduction is already carried out upstream of the branching location 56.

There is arranged downstream of the throttle location a filter 68 which homogenises the refrigerating medium downstream of the throttle location by the liquid and gaseous portions being mixed so that a homogeneous distribution is carried out over the two outlet lines 58.

In the example of Figure 3, the throttle location is formed by a separate inserted pipe 70 having a calibrated inner diameter. The inner diameter and length may be selected as with the calibrated bore 62 of the previous embodiment.

In order to secure the pipe 70 in the body 50 of the brancher 44, there is provided a screwed fitting 72 which is screwed into the connection piece 66 of the inlet 52. In place of the screwed fitting 72, an insertion sleeve which is inserted into the connection piece 66 could also be used.

The screwed fitting 72 has an end stop 74 which ensures precise positioning of the pipe 70 in the main line 54.

At the inlet side, the pipe 70 is covered by a filter 64 which prevents contamination of the brancher 44.

The calibrated inner diameter of the inserted pipe 70 can be produced with high precision as a bore.

In place of the inserted pipe 70, a calibrated bore could also be formed in the body 50 in the main line, as described in the example of Figure 2 for the outlet lines 58. In a similar manner, in the embodiment illustrated in Figure 2, in place of the calibrated bores 62, a pipe 70 having a calibrated inner diameter could also be inserted in the outlet lines 58, respectively.

It is further possible, not only to provide a throttle location in the brancher 44 but also to provide two throttle locations which are sequential in terms of flow, the first throttle location being arranged in the main line 54 and the second throttle location being formed by a narrowing in each of the outlet lines 58, respectively.

Figure 4 shows a pressure reduction device 40 which has two throttle stages which are sequential in terms of flow.

The pressure reduction device 40 is composed in this instance of a brancher 44 and a shut-off valve 42, which are screwed to each other by means of the connection piece 66 of the brancher 44. The brancher 44 corresponds in this example to the brancher 44 illustrated in Figure 2. However, a brancher according to the embodiment illustrated in Figure 3 or another suitable brancher 44 could also be used.

The shut-off valve 42 is in this example switched by means of an electromagnet 76 which is connected to the control unit 46 of the battery cooler system 32. By means of the electromagnet 76, the shut-off valve 42 is switched between the two switching states "open" and "closed", the refrigerating medium flow through the inlet 78 of the shut-off valve 42 either being permitted to the full extent or completely prevented.

Directly downstream of a valve seat 80 of the shut-off valve 42, a first throttle stage is produced, in this instance by means of a calibrated bore 82 which represents a narrowing of the throughflow cross-section for the refrigerating medium. The cross-section of the calibrated bore 82 is reduced with respect to the cross-section of the inlet 78 and also with respect to the cross-section of the adjacent inlet 52 of the brancher 44. In this manner, a first depressurisation of the refrigerating medium and a first pressure reduction are brought about in the calibrated bore 82.

A second throttle stage is formed in the brancher 44, in this instance by means of the narrowed portions which are formed by the calibrated bores 62 in the outlet lines 58 and which bring about a second pressure reduction and a further depressurisation of the refrigerating medium.

In place of the calibrated bore 82 in the body of the shut-off valve 42, a calibrated bore or a pipe 70 having a calibrated inner diameter could also be provided in the inlet 52 of the brancher 44. The construction of the shut-off valve 42 may thus be further simplified.

From the outlet lines 58, the refrigerating medium flows into the two cooling branches 34, 36 of the battery cooler circuit 30.

In the embodiment illustrated in Figure 1, the battery cooler system 32 is configured in such a manner that, at low ambient temperatures below "winter conditions", that is to say, at a temperature between approximately -10 and 0ºC, a pressure difference of approximately 10 bar and an enthalpy difference of approximately 240 kJ/kg is achieved by means of the pressure reduction device. The pressure difference may also be configured for a pressure difference between the high-pressure and the low-pressure side of the entire refrigerating medium circuit 10. These parameters are achieved by the specific configuration of the throttle stages of the pressure reduction device 40.

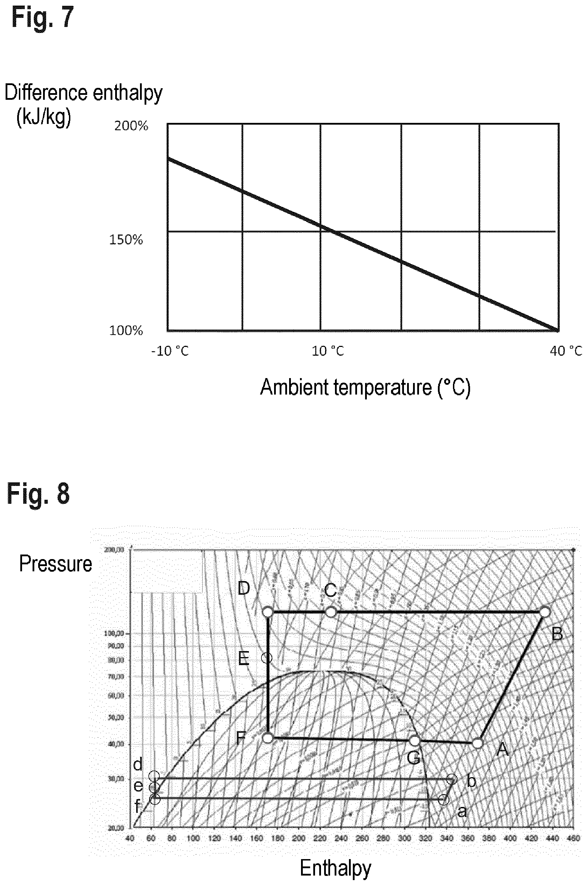

It is important for the refrigerating medium flow which is achieved by the cross-section reductions in the throttle stages to be large enough to provide sufficient cooling power for the battery modules in the battery cooler circuit 30 even at the low ambient temperatures. Under these ambient conditions, the phase limit to the overcritical state is exceeded only by approximately from 1 to 5 Kelvin (see also Figure 8).

At the ambient temperatures during summer, that is to say, temperatures of up to approximately +40ºC, there is a considerably greater pressure difference between the high-pressure side and the low-pressure side of the refrigerating medium circuit 10 and also the battery cooler circuit 30. In order to prevent an excessively large quantity of fluid refrigerating medium from passing the brancher 44 under these conditions, which medium cannot be completely evaporated in the cooling branches 34, 36 and thus would reduce the cooling power of the evaporator 20 for the air-conditioning of the passenger space, the shut-off valve 42 is operated in a pulsed manner.

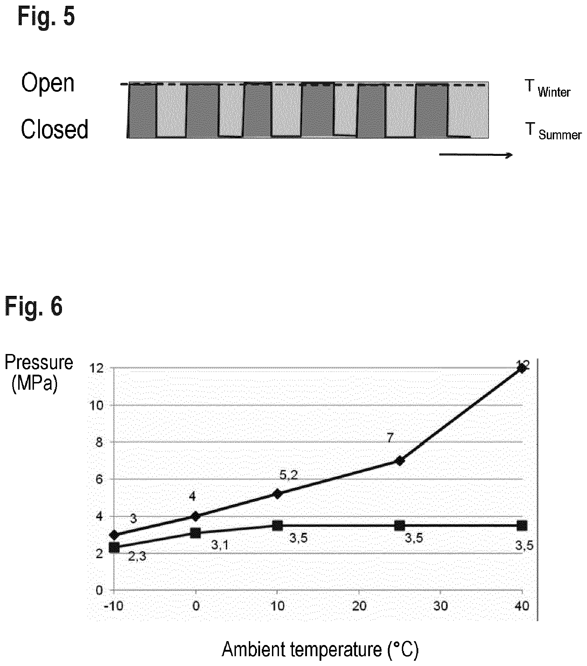

This is illustrated schematically in Figure 5. The solid line indicates that, at high ambient temperatures, the shut-off valve 42 is operated via the control unit 46 by means of a pulse width modulation in such a manner that the cooling power is optimised. The opening duration of the shut-off valve 42 is calculated by the control unit 46 from the values indicated by the temperature sensors T₁ and T₂, that is to say, from the refrigerating medium temperature at the inlet 52 of the brancher 44 and the refrigerating medium temperature after passing through the cooling branches 34, 36 of the battery cooler circuit 30.

The period of time for which the shut-off valve 42 remains closed between two opening states may be 30 seconds or more, as may the period of time for which the shut-off valve 42 is opened between the closed phases. This is possible since the battery cooler circuit 30 with the battery modules has a higher thermally effective mass than, for example, the evaporator 20 of the vehicle air-conditioning system.

In winter, that is to say, at low ambient temperatures and a small pressure difference, the shut-off valve 42 is in contrast continuously open (see dashed line in Figure 5).

Figures 6 and 7 show the pressures at the high-pressure side of the refrigerating medium circuit 10 and at the low-pressure side thereof in accordance with the ambient temperature. The pressure path of the high-pressure side is characterised by lozenge shapes, whilst the pressure path at the low-pressure side is characterised by squares. From Figure 6, it can be seen that, under winter conditions between -10 and 0ºC, a pressure difference between 7 and 9 bar (0.7 to 0.9 MPa) is to be anticipated, whilst, under summer conditions with ambient temperatures between 25 and 40ºC, considerably higher pressure differences occur of approximately from 35 to 65 bar (3.5 to 6.5 MPa), a pressure difference of 90 bar also being able to occur.

For an existing battery cooler system 32 in a refrigerating medium circuit 10, the optimum construction of the pressure reduction device 40 can be calculated from such a measurement. To this end, the enthalpy difference during the condensation of the refrigerating medium, in this instance R744, further has to be taken into account, which difference is indicated in Figure 7 in accordance with the ambient temperature.

The pressure difference between the high-pressure and low-pressure side increases significantly as the ambient temperature increases. Since the mass flow which is adjusted changes substantially with the root of the pressure difference, for example, for an ambient temperature of -10ºC, the possible cooling power of the battery cooler circuit 30 is consequently reduced by approximately 40% in comparison with an ambient temperature of +40ºC. If the battery cooler system 32 and in particular the pressure reduction device 40 is optimised for operation at low ambient temperatures, this results in the shut-off valve 42 being intended to be closed for approximately from 30 to 90% of the time during operation at high ambient temperatures.

The configuration of the remaining refrigerating medium circuit 10, in particular the part-cooling circuit 18, which operates the vehicle air-conditioning system evaporator 20, is not affected by these considerations since only the pressure reduction device 40 has to be correspondingly configured in the battery cooler circuit 30.

Figure 8 shows, with reference to a Mollier diagram, the executed cycles for an operation of the refrigerating medium circuit 10 under summer conditions (high ambient temperatures) and winter conditions (low ambient temperatures).

The upper cycle in the graphic with points A to G describes the operation at high ambient temperatures.

The high-pressure side which in this instance is preferably between 80 and 120 bar, is operated in the overcritical region. From point A to point B, the compression of the refrigerating medium is carried out in the compressor 12. From point B to point C, the overcritical refrigerating medium is cooled in the gas cooler 14. From point C to point D, further cooling is carried out at the high-pressure side of the refrigerating medium circuit 10 by means of the inner heat exchanger 16. From point D to point E, a pressure reduction is carried out in the first throttle stage of the pressure reduction device 40, the pressure reduction being carried out to a maximum extent up to the fluid limit so that the refrigerating medium still has only one phase or is in the overcritical state when it enters the brancher 44. From point E to point F, the further pressure reduction is carried out in the second throttle stage of the pressure reduction device 40, in this instance in the outlet lines 58 of the brancher 44. From point F to point G, the cooling of the battery modules in the cooling branches 34, 36 of the battery cooler circuit 30 is carried out, the refrigerating medium evaporating and absorbing the heat from the battery modules. From point G to point A, the refrigerating medium finally flows via the return suction line 38, passing the inner heat exchanger 16, back to the compressor 12, wherein it absorbs heat from the high-pressure branch.

In winter operation (lower cycle in Figure 8 with the points a to f), the entire cycle is carried out below the critical point. From point a to point b, the refrigerating medium is compressed and cooled from point b to point d. After the depressurisation of the refrigerating medium in the first throttle stage of the pressure reduction device 40 (point d to point e), the refrigerating medium is completely in the fluid phase. Only when the second throttle stage is passed (point e to point f) may the refrigerating medium have gaseous portions.

In the example described in this instance, however, the refrigerating medium is still in only a single phase when it reaches the brancher 44. In this manner, a homogeneous distribution over the two cooling branches 34, 36 is more readily possible than in a mixed phase state.

## Claims

1. Battery cooler system having a refrigerating medium circuit (10), a compressor (12), a gas cooler (14), a pressure reduction device (40) and a battery cooler circuit (30) which has a plurality of cooling branches (34, 36), the pressure reduction device (40) having a brancher (44) and at least a first and a second throttle stage, there being provided between the first and the second throttle stage a branching location (56) with which the refrigerating medium flow is distributed over the cooling branches (34, 36) of the battery cooler circuit (30) and the two throttle stages of the pressure reduction device (40) being adjusted in such a manner that the refrigerating medium is present substantially in a single phase downstream of the first throttle stage, the pressure drop over the first throttle stage is in the order of magnitude of from 10% to 50% of the entire pressure drop over the pressure reduction device (40), there is arranged parallel with the battery cooler circuit (30) an evaporator (20) which is part of a vehicle air-conditioning system circuit, **characterized in that** a safety valve (26) is associated with the evaporator (20), and a bypass line (24) is associated with the safety valve (26), the bypass line (24) enabling a refrigerating medium flow when a critical pressure threshold, which may in particular be in the order of magnitude of from 120 to 150 bar, is reached at the safety valve.

2. Battery cooler system according to claim 1, **characterised in that** the first throttle stage has a single throttle location.

3. Battery cooler system according to any one of the preceding claims, **characterised in that** the pressure reduction device (40) comprises a shut-off valve (42) and **in that** the first throttle stage is integrated in the shut-off valve (42).

4. Battery cooler system according to any one of the preceding claims, **characterised in that** the second throttle stage is formed by one throttle location per cooling branch (34, 36).

5. Battery cooler system according to any one of the preceding claims, **characterised in that** the throttle location of the second throttle stage is formed by a calibrated bore (62) which represents a cross-section narrowing of a main line (54) or at least one outlet line (58) of the brancher (44).

6. Battery cooler system according to any one of the preceding claims, **characterised in that** the refrigerating medium is R744.

## Patentansprüche

1. Batteriekühlersystem mit einem Kältemittelkreislauf (10), einem Verdichter (12), einem Gaskühler (14), einem Druckminderer (40) und einem Batteriekühlerkreislauf (30) mit mehreren Kühlzweigen (34, 36), wobei der Druckminderer (40) einen Verzweiger (44) sowie mindestens eine erste und eine zweite Drosselstufe aufweist, wobei zwischen der ersten und der zweiten Drosselstufe ein Verzweigungspunkt (56) vorgesehen ist, mit dem der Kältemittelstrom auf die Kühlzweige (34, 36) des Batteriekühlerkreislaufs (30) verteilt wird, und die beiden Drosselstufen des Druckminderers (40) so eingestellt sind, dass stromabwärts der ersten Drosselstufe das Kältemittel im Wesentlichen in einer einzigen Phase vorliegt, wobei der Druckabfall über die erste Drosselstufe in der Größenordnung von 10% bis 50% des Gesamt-Druckabfalls über den Druckminderer (40) beträgt, wobei parallel zum Batteriekühlerkreislauf (30) ein Verdampfer (20) angeordnet ist, der Teil eines Fahrzeug-Klimaanlagen-Kreislaufs ist, **dadurch gekennzeichnet, dass** dem Verdampfer (20) ein Sicherheitsventil (26) zugeordnet ist, und dem Sicherheitsventil (26) eine Bypass-Leitung (24) zugeordnet ist, wobei die Bypass-Leitung (24) einen Kältemittelstrom ermöglicht, wenn am Sicherheitsventil eine kritische Druckschwelle erreicht wird, die insbesondere in der Größenordnung von 120 bis 150 bar liegen kann.

2. Batteriekühlersystem nach Anspruch 1, **dadurch gekennzeichnet, dass** die erste Drosselstufe eine einzige Drosselstelle aufweist.

3. Batteriekühlersystem nach einem der vorhergehenden Ansprüche, **dadurch gekennzeichnet, dass** der Druckminderer (40) ein Abschaltventil (42) umfasst und dass die erste Drosselstufe in das Abschaltventil (42) integriert ist.

4. Batteriekühlersystem nach einem der vorhergehenden Ansprüche, **dadurch gekennzeichnet, dass** die zweite Drosselstufe durch eine Drosselstelle je Kühlzweig (34, 36) gebildet ist.

5. Batteriekühlersystem nach einem der vorhergehenden Ansprüche, **dadurch gekennzeichnet, dass** die Drosselstelle der zweiten Drosselstufe durch eine kalibrierte Bohrung (62) gebildet ist, die eine Querschnittsverengung einer Hauptleitung (54) oder wenigstens einer Auslassleitung (58) des Verzweigers (44) darstellt.

6. Batteriekühlersystem nach einem der vorhergehenden Ansprüche, **dadurch gekennzeichnet, dass** das Kältemittel R744 ist.

## Revendications

1. Système de refroidissement de batterie ayant un circuit d'agent réfrigérant (10), un compresseur (12), un refroidisseur de gaz (14), un dispositif de réduction de pression (40) et un circuit de refroidissement de batterie (30) qui a une pluralité de branches de refroidissement (34, 36), le dispositif de réduction de pression (40) ayant un dispositif d'embranchement (44) et au moins un premier et un deuxième étage d'étranglement, là étant disposé, entre le premier et le deuxième étage d'étranglement, un emplacement d'embranchement (56) avec lequel l'écoulement d'agent réfrigérant est distribué sur les branches de refroidissement (34, 36) du circuit de refroidissement de batterie (30) et les deux étages d'étranglement du dispositif de réduction de pression (40) étant ajustés de telle sorte que l'agent réfrigérant est présent sensiblement dans une seule phase en aval du premier étage d'étranglement, la chute de pression sur le premier étage d'étranglement est de l'ordre de grandeur de 10 % à 50 % de la chute de pression totale sur le dispositif de réduction de pression (40), là est disposé, parallèle au circuit de refroidissement de batterie (30), un évaporateur (20) qui fait partie d'un circuit de climatiseur de véhicule, **caractérisé en ce que**
une soupape de sûreté (26) est associée à l'évaporateur (20), et une ligne de dérivation (24) est associée à la soupape de sûreté (26), la ligne de dérivation (24) permettant un écoulement d'agent réfrigérant quand un seuil de pression critique, qui peut en particulier être de l'ordre de grandeur de 120 à 150 bar, est atteint au niveau de la soupape de sûreté.

2. Système de refroidissement de batterie selon la revendication 1, **caractérisé en ce que** le premier étage d'étranglement a un seul emplacement d'étranglement.

3. Système de refroidissement de batterie selon l'une quelconque des revendications précédentes, **caractérisé en ce que** le dispositif de réduction de pression (40) comprend un robinet d'arrêt (42) et **en ce que** le premier étage d'étranglement est intégré dans le robinet d'arrêt (42).

4. Système de refroidissement de batterie selon l'une quelconque des revendications précédentes, **caractérisé en ce que** le deuxième étage d'étranglement est formé par un emplacement d'étranglement par branche de refroidissement (34, 36).

5. Système de refroidissement de batterie selon l'une quelconque des revendications précédentes, **caractérisé en ce que** l'emplacement d'étranglement du deuxième étage d'étranglement est formé par un alésage calibré (62) qui représente un rétrécissement de section transversale d'une ligne principale (54) ou au moins une ligne de sortie (58) du dispositif d'embranchement (44).

6. Système de refroidissement de batterie selon l'une quelconque des revendications précédentes, **caractérisé en ce que** l'agent réfrigérant est le R744.
